# EUROPEAN PATENT APPLICATION

(11) **EP 4 772 743 A1**
(43) Date of publication of application: **08.07.2026**
(21) Application number: 24955205.0
(22) Date of filing: 19.12.2024
(51) Int. Cl.: F04B 27/02, F04B 35/04, H02K 7/10

(54) **OIL-FREE AIR COMPRESSOR TRANSMISSION STRUCTURE, OIL-FREE AIR COMPRESSOR, AND VEHICLE**

(30) Priority: 27.09.2024 CN 202411356383
(71) Applicant: Zhejiang Ruili Air Compressor Equipment Co., Ltd, Wenzhou, Zhejiang 325200 (CN)
(72) Inventor: ZHU, Bin, Wenzhou, Zhejiang 325200 (CN); YU, Wen, Wenzhou, Zhejiang 325200 (CN); CAI, Qimi, Wenzhou, Zhejiang 325200 (CN); ZHOU, Shengbo, Wenzhou, Zhejiang 325200 (CN); LIU, Guodong, Wenzhou, Zhejiang 325200 (CN)
(74) Representative: RCF - Protecting Innovation, S.A.
(86) International application number: PCT/CN2024/140595
(87) International publication number: WO 2026/065785

(57) **Abstract**

The present invention relates to an oil-free air compressor transmission structure. The oil-free air compressor transmission structure comprises a motor housing (1), a motor assembly, and a bearing assembly. The motor assembly comprises an inner shaft (2). It further comprises a box body (3), a power component, and a large bearing (6). The power component comprises a first half-crank (4) and a second half-crank (5). The first half-crank (4) and the second half-crank (5) are mutually interlocked and connected to form a crank shaft. It further comprises a connecting member (13). In the present invention, the first segment and the inner shaft (2) may be detachably connected simply through the connecting member (13). The present invention solves the technical problem of how to connect the crank shaft with the inner shaft by removing the elastic coupling.

## Description

### Technical Field

The present invention relates to the technical field of vehicle air compressors, and specifically relates to an oil-free air compressor transmission structure, an oil-free air compressor and a vehicle.

### Background Art

An air compressor is the core equipment of a vehicle's pneumatic system. It is a device that converts the mechanical energy of the prime mover into gas pressure energy, and is a pressure generating device for compressed air. In the mechanical field and various production, decoration, and manufacturing fields, the application of air compressors is very widespread, and air compressors are the source power for driving pneumatic tools.

Patent document CN201711132468.6 discloses an air compressor mentioned in the prior art, which comprises an intercooler group, a high-pressure piston assembly, a low-pressure piston assembly, a piston cylinder, a crankcase and a crankshaft. This air compressor is provided with a motor as the power source, which directly drives the air compressor crankshaft to rotate through an elastic coupling, and the high-pressure piston assembly and low-pressure piston assembly placed on the crank move up and down reciprocally.

In the prior art, the crank shaft is connected to the inner shaft of the motor through an elastic coupling, and the elastic coupling is expensive, which does not meet the current requirement for continuous cost reduction of air compressors. If the connection manner between the crank shaft and the inner shaft can be changed, so that the elastic coupling is removed in the connection structure between the crank shaft and the inner shaft, then the cost of the elastic coupling can be reduced in the manufacturing cost of the air compressor, which can meet the current cost reduction requirement for air compressors.

Meanwhile, in the prior art, during long-term use of the motor, the main wearing parts are the internal bearings. Due to the limited installation space inside the motor resulting in smaller bearing loads, as well as severe working conditions such as high vibration of the air compressor and frequent start-stop impacts, the lifespan is poor.

Therefore, the technical problem existing in the prior art is how to connect the crank shaft with the inner shaft by removing the elastic coupling.

Furthermore, it is also desirable to improve the motor lifespan.

### SUMMARY

In view of the technical problem in the prior art of how to connect the crank shaft with the inner shaft by removing the elastic coupling, the present invention provides an oil-free air compressor transmission structure, an oil-free air compressor and a vehicle.

The present invention is achieved through the following technical solution:
An oil-free air compressor transmission structure, comprising a motor housing, a motor assembly, and a bearing assembly, the motor assembly is arranged inside the motor housing, the motor assembly comprises an inner shaft, and a rotor fixedly sleeved on the outer surface of the inner shaft, the inner shaft is rotatably connected to the motor housing through the bearing assembly;
further comprising a box body, a power component, and a large bearing, the box body is detachably connected to the motor housing, the power component comprises a first half-crank and a second half-crank, the first half-crank and the second half-crank are mutually interlocked and connected to form a crank shaft, the crank shaft is rotatably connected to the box body through the large bearing; wherein, the second half-crank is located between the first half-crank and the inner shaft along the axial direction of the inner shaft;
characterized in that, the large bearing is sleeved on the crank shaft, the large bearing is used to bear a part of the load of the motor assembly, wherein the load of the motor assembly refers to the axial and radial forces of the inner shaft and the rotor of the motor assembly;
a segment of the second half-crank away from the first half-crank along the axial direction of the inner shaft is a first segment, the first segment and the inner shaft are coaxially arranged; further comprising a connecting member, the first segment and the inner shaft can be separated from each other, or only detachably connected through the connecting member; wherein the connecting member is a bolt or a screw;
the bearing assembly comprises a front bearing and a rear bearing, wherein the inner shaft is supported by the motor housing through the front bearing and the rear bearing, and the bearing outer rings of the front bearing and the rear bearing respectively have a clearance fit with the motor housing, and the front bearing is located between the large bearing and the rear bearing along the axial direction of the inner shaft; and, the size and support strength of the large bearing are higher than the size and support strength of the front bearing and the rear bearing;
   or,
the bearing assembly only comprises a rear bearing, wherein a segment of the inner shaft away from the first half-crank is a rear segment, the rear segment of the inner shaft is supported by the motor housing through the rear bearing, the bearing outer ring of the rear bearing has a clearance fit with the motor housing; and, the size and support strength of the large bearing are higher than the size and support strength of the rear bearing.

Further, the inner shaft is internally provided with a mating channel and a connecting channel that are mutually coaxial and interconnected with each other, the mating channel forms a first opening on one end face of the inner shaft, the first opening faces the first half-crank, the connecting channel forms a second opening on the other end face of the inner shaft, the second opening faces away from the first half-crank, the first segment is internally provided along its axial direction with a threaded blind hole, the opening of the threaded blind hole is located on the end face of the first segment away from the first half-crank;
the connecting member has a head and a shank, the outer surface of the shank has threads, the maximum cross-sectional diameter of the shank is smaller than the cross-sectional diameter of the head, and also smaller than the cross-sectional diameter of the mating channel and the cross-sectional diameter of the connecting channel;
when the first segment and the inner shaft are detachably connected through the connecting member, the first segment is inserted from the first opening into the mating channel, the threaded blind hole, the mating channel, and the connecting channel are coaxial; the connecting member passes through the second opening, and, a part of the shank of the connecting member is threadedly connected with the threaded blind hole, the head of the connecting member is restricted within the connecting channel.

Further, the connecting channel is internally provided with a limiting step surface, when the first segment and the inner shaft are detachably connected through the connecting member, the head of the connecting member is immovably restricted between the limiting step surface and the second opening;
further comprising an elastic washer, when the first segment and the inner shaft are detachably connected through the connecting member, the elastic washer is located between the limiting step surface and the head of the connecting member along the axial direction of the connecting channel; one side end face of the elastic washer and the limiting step surface form surface-to-surface contact, the other side and the end face of the head of the connecting member form surface-to-surface contact; the head of the connecting member abuts against the limiting step surface through the elastic washer.

Further, the outer surface of the first segment is configured as a tapered outer surface, and the tapered outer surface of the first segment is convergent in the direction from the first half-crank pointing to the inner shaft;
the inner surface of the mating channel is a tapered inner surface; the tapered inner surface of the mating channel is convergent in the direction from the first half-crank pointing to the inner shaft;
wherein, the taper angle of the tapered outer surface of the first segment and the taper angle of the tapered inner surface of the mating channel are consistent in size.

Further, the connecting channel comprises a threaded channel and a smooth channel arranged coaxially, wherein the threaded channel is located between the mating channel and the smooth channel, the channel inner wall of the threaded channel has internal threads for cooperating with the external threads of a bolt member, the pitch diameter of the cross-section of the threaded channel is larger than the cross-section diameter of the threaded blind hole, and smaller than the cross-sectional diameter of the smooth channel.

Further, the motor housing is provided at its end away from the first half-crank with a rear shaft hole; the rear segment of the inner shaft passes through the rear shaft hole along the axial direction of the rear shaft hole, and is connected to the rear shaft hole through the rear bearing, wherein the rear segment of the inner shaft is connected with the bearing inner ring of the rear bearing by an interference fit;
the hole wall of the rear shaft hole is provided with a first step surface, the first step surface extends along the radial direction of the rear shaft hole, and the bearing outer ring of the rear bearing and the first step surface have a clearance fit along the axial direction of the rear bearing.

Further, the circumferential outer surface of the bearing outer ring of the rear bearing and the circumferential inner wall of the rear shaft hole have a clearance fit along the radial direction of the rear bearing.

Further, a first elastic body is filled within the clearance between the bearing outer ring of the rear bearing and the first step surface along the axial direction of the rear bearing;
and/or,
a second elastic body is filled within the clearance between the circumferential outer surface of the bearing outer ring of the rear bearing and the circumferential inner wall of the rear shaft hole along the radial direction of the rear bearing.

An oil-free air compressor, comprising the aforementioned oil-free air compressor transmission structure.

A vehicle, comprising the aforementioned oil-free air compressor.

Compared with the prior art, the advantages of the present invention are:
1. In the present invention, the first segment and the inner shaft may be detachably connected simply through the connecting member, the first segment is a part of the second half-crank, and the second half-crank is a part of the crank shaft; that is, in the present invention, the crank shaft and the inner shaft may be detachably connected simply through the connecting member; therefore, the present invention achieves the removal of the coupling, enabling the crank shaft and the inner shaft to be directly connected only through the connecting member; in summary, the present invention solves the technical problem of how to connect the crank shaft with the inner shaft by removing the elastic coupling.
2. In the prior art, the motor and the crankcase are independent components, the inner shaft of the motor and the crank shaft of the crankcase are connected through an elastic coupling; since there is a gap between the driving end and the driven end of the elastic coupling, the load of the 'inner shaft and rotor' in the prior art cannot be supported by the double-row angular contact ball bearing in the prior art. Generally, the motor housing interior is provided with two bearings, here defined as a first bearing and a second bearing, wherein when the motor is connected to the crankcase, the first bearing is located between the double-row angular contact ball bearing inside the crankcase and the second bearing inside the motor housing; the bearing inner rings of the first bearing and the second bearing are respectively interference fitted with the inner shaft, and the bearing outer rings of the first bearing and the second bearing are respectively interference fitted with the motor housing, so that the inner shaft cannot produce displacement relative to the motor housing along the axial direction, and the motor housing supports the inner shaft and rotor through the first and second bearings; during motor operation, the load borne by the first bearing is greater than that borne by the second bearing, causing the first bearing to wear out before the second bearing, and the wear of the first bearing reduces the motor lifespan. In the present invention, the inner shaft of the motor and the crank shaft of the crankcase are directly connected through the connecting member, allowing the inner shaft of the motor and the crank shaft of the crankcase to be considered as an integrated structure, or in other words, the crank shaft of the crankcase can be regarded as an extension of the inner shaft of the motor; thus, the large bearing in the present invention can, through 'the direct connection of the motor's inner shaft and the crankcase's crank shaft via the connecting member', bear the load from the motor's 'inner shaft and rotor'. In the present invention, the inner shaft corresponds to the inner shaft of the motor in the prior art, the position of the large bearing corresponds to the position of the double-row angular contact ball bearing in the prior art, the position of the front bearing corresponds to the position of the first bearing in the prior art, and the position of the rear bearing corresponds to the position of the second bearing in the prior art; wherein, the size and support strength of the large bearing are far higher than those of the front bearing and rear bearing, and far higher than those of the first and second bearings in the prior art. In the first solution, the bearing inner rings of the front bearing and rear bearing inside the motor are respectively interference fitted with the inner shaft, while the bearing outer rings of the front bearing and rear bearing inside the motor respectively have a clearance fit with the housing, allowing the inner shaft to produce displacement relative to the housing during operation. The large bearing, the front bearing, and the rear bearing in the present invention jointly bear the load from the motor's 'inner shaft and rotor', and under this setting, the load borne by the front bearing from the motor's 'inner shaft and rotor' is less than the load borne by the first bearing in the prior art from its motor's 'motor shaft and rotor'. As such, under the conditions that the operating time of the motor in the present invention is the same as that of the motor in the prior art, and the operating speed of the motor in the present invention is the same as that of the motor in prior art, the wear degree of the front bearing in the first solution is lower than that of the first bearing in the prior art, making the lifespan of the front bearing higher than that of the first bearing in the prior art, and consequently the lifespan of the motor in the present invention higher than that of the motor in the prior art. In the second solution, the bearing inner ring of the rear bearing inside the motor is interference fitted with the inner shaft, while the bearing outer ring of the rear bearing inside the motor has a clearance fit with the motor housing, allowing the inner shaft to produce displacement relative to the motor housing along the axial direction during operation; due to the omission of the front bearing, the large bearing and rear bearing jointly bear the load from the motor's 'inner shaft and rotor'; on this basis, since the size and support strength of the large bearing are greater than those of the omitted front bearing, such that under the conditions that the operating time of the motor is the same as that of the 'first solution', and the operating speed of the motor is the same as that of the 'first solution', the wear degree of the large bearing in the second solution is lower than that of the front bearing in the aforementioned 'first solution', making the lifespan of the large bearing higher than that of the front bearing in the first solution; since the lifespan of the front bearing in the aforementioned 'first solution' is higher than that of the first bearing in the prior art, and the lifespan of the large bearing is higher than that of the front bearing in the first solution, so that the lifespan of the large bearing in the second solution is higher than that of the first bearing in the prior art, and consequently the lifespan of the motor in the second solution is higher than that of the motor in the prior art.
3. In the present invention, the rear segment of the inner shaft is connected with the bearing inner ring of the rear bearing by an interference fit, meaning the rear segment of the inner shaft and the bearing inner ring of the rear bearing rotate synchronously; the bearing outer ring of the rear bearing and the first step surface have a clearance fit, meaning there is a gap between the bearing outer ring of the rear bearing and the first step surface; as such, due to the clearance setting between the bearing outer ring of the rear bearing and the first step surface, the position of the inner shaft may be adjusted along its axial direction; the setting of the front bearing is similar; thus achieving the purpose of making the position of the inner shaft adjustable along the axial direction.
4. In the present invention, the circumferential outer surface of the bearing outer ring of the rear bearing and the circumferential inner wall of the rear shaft hole have a clearance fit. As such, in the case where the inner shaft and the first segment are not coaxial, the inner shaft may be adjusted by radial movement so that the axis of the inner shaft and the axis of the first segment are on the same straight line, and then the inner shaft and the first segment are assembled together. Therefore, in the present invention, the purpose of making the position of the inner shaft adjustable along the radial direction is also achieved.
5. The prior art uses a structure that connects the inner shaft of the motor to the crank shaft through an elastic coupling, since the elastic body of the elastic coupling is generally a plastic product such as polyurethane, the lifespan is poor, and there is a risk of aging, wear, cracking and other failures during long-term use; in the present invention, since the use of an elastic coupling is avoided, and a metal connecting member is used to connect the motor's inner shaft and the crank shaft, the occurrence of the above problems may be avoided.

### Description of Drawings

Figure 1 is a sectional schematic view of the oil-free air compressor transmission structure in Example 1;
Figure 2 is a schematic view of the limiting step surface in Figure 1;
Figure 3 is an enlarged view of area A in Figure 1;
Figure 4 is an enlarged view of area B in Figure 1;
Figure 5 is an enlarged view of area C in Figure 1;
Figure 6 is a sectional schematic view of the oil-free air compressor transmission structure in Example 2.

Label in the drawings: motor housing (1), inner shaft (2), box body (3), first half-crank (4), second half-crank (5), large bearing (6), first segment (7), mating channel (8), connecting channel (9), first opening (10), second opening (11), threaded blind hole (12), connecting member (13), head (14), shank (15), limiting step surface (16), elastic washer (17), threaded channel (18), smooth channel (19), bolt member (20), rear segment (21), rear shaft hole (22), rear bearing (23), first step surface (24), first elastic body (25), second elastic body (26), front bearing (27), front shaft hole (28), rotor (29), stator (30), counterweight part (31), low-pressure piston connecting rod assembly (32), low-pressure bearing (33), high-pressure piston connecting rod assembly (34), high-pressure bearing (35), front segment (36), second step surface (37).

### DETAILED DESCRIPTIONS

The following describes the technical solution of the invention in further non-limiting detail by combining preferred embodiments and their accompanying drawings. In the description of the present invention, it should be understood that the directions or positional relationships indicated by terms such as "center", "longitudinal", "transverse", "length", "width", "thickness", "up", "down", "front", "rear", "left", "right", "vertical", "horizontal", "top", "bottom", "inside", "outside", "clockwise", "counterclockwise", "axial", "radial", "circumferential" are based on the directions or positional relationships shown in the drawings. Furthermore, terms "first", "second" are used for descriptive purposes only and cannot be understood as indicating or implying relative importance or implicitly specifying the quantity of the indicated technical feature. Thus, features defined with "first", "second" may explicitly or implicitly include at least one such feature. In the description of the present invention, "a plurality of" means at least two, such as two, three, etc., unless otherwise explicitly and specifically defined. The Examples described below with reference to the drawings are exemplary, intended to explain the present invention and should not be construed as limiting the present invention.

### Example 1

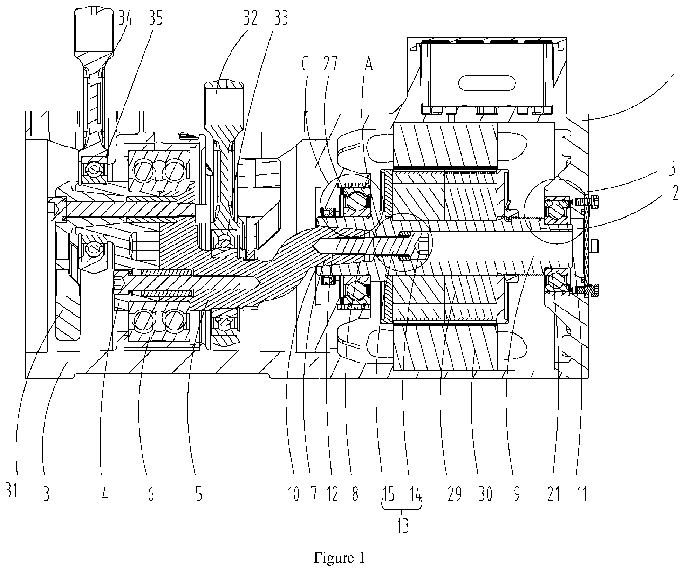

As shown in Figure 1, Example 1 provides an oil-free air compressor transmission structure, comprising a motor housing (1), a motor assembly, and a bearing assembly, the motor assembly is arranged inside the motor housing (1), the motor assembly comprises an inner shaft (2), and a rotor (29) fixedly sleeved on the outer surface of the inner shaft (2), the inner shaft (2) is rotatably connected to the motor housing (1) through the bearing assembly; further comprising a box body (3), a power component, and a large bearing (6), the box body (3) is detachably connected to the motor housing (1), the power component comprises a first half-crank (4) and a second half-crank (5), the first half-crank (4) and the second half-crank (5) are mutually interlocked and connected to form a crank shaft, the crank shaft is rotatably connected to the box body (3) through the large bearing (6); wherein, the second half-crank (5) is located between the first half-crank (4) and the inner shaft (2) along the axial direction of the inner shaft (2); characterized in that, the large bearing (6) is sleeved on the crank shaft, the large bearing (6) is used to bear a part of the load of the motor assembly, wherein the load of the motor assembly refers to the axial and radial forces, for example gravity, start-stop impact forces, magnetic field pulling force, vehicle random vibration, assembly eccentric force, etc. of the inner shaft (2) and rotor (29) of the motor assembly; a segment of the second half-crank (5) away from the first half-crank (4) along the axial direction of the inner shaft (2) is a first segment (7), the first segment (7) and the inner shaft (2) are coaxially arranged; further comprising a connecting member (13), the first segment (7) and the inner shaft (2) may be separated from each other, or only detachably connected through the connecting member (13); wherein the connecting member (13) is a bolt or a screw; the bearing assembly comprises a front bearing (27) and a rear bearing (23), wherein the inner shaft (2) is supported by the motor housing (1) through the front bearing (27) and the rear bearing (23), and the bearing outer rings of the front bearing (27) and the rear bearing (23) respectively have a clearance fit with the motor housing (1), and, the front bearing (27) is located between the large bearing (6) and the rear bearing (23) along the axial direction of the inner shaft (2); and, the size and support strength of the large bearing (6) are higher than the size and support strength of the front bearing (27) and the rear bearing (23); or, the bearing assembly only comprises a rear bearing (23), wherein a segment of the inner shaft (2) away from the first half-crank (4) is a rear segment (21), the rear segment (21) of the inner shaft (2) is supported by the motor housing (1) through the rear bearing (23), the bearing outer ring of the rear bearing (23) has a clearance fit with the motor housing (1); and, the size and support strength of the large bearing (6) are higher than the size and support strength of the rear bearing (23).

The motor assembly comprises an inner shaft (2), which is a shaft structure extending linearly; the motor assembly further comprises a rotor (29), which is sleeved on the outer surface of the inner shaft (2) and fixed to inner shaft (2); the motor assembly further comprises a stator (30), which is connected to the motor housing (1) and arranged surrounding the rotor (29); the motor assembly further comprises a bearing assembly, the inner shaft (2) is rotatably connected to the motor housing (1) through the bearing assembly, and at the same time, the combination of the rotor (29) and inner shaft (2) is supported by the motor housing (1) through the bearing assembly; when the stator (30) generates a rotating magnetic field, the rotor (29) drives the inner shaft (2) to rotate synchronously and coaxially.

The power component comprises a first half-crank (4) and a second half-crank (5), the structures of the first half-crank (4) and second half-crank (5) are similar but not identical, the first half-crank (4) and the second half-crank (5) are mutually interlocked and connected to form a crank shaft, the connection method may refer to the content disclosed in patent document CN202220104964.0; the power component further comprises a counterweight part (31), which is detachably connected to the first half-crank (4), used to balance the reciprocating inertia moment of the crank shaft rotation; the power component further comprises a low-pressure piston connecting rod assembly (32) and a low-pressure bearing (33), the low-pressure piston connecting rod assembly (32) is rotatably connected to the second half-crank (5) through the low-pressure bearing (33); the power component further comprises a high-pressure piston connecting rod assembly (34) and a high-pressure bearing (35), the high-pressure piston connecting rod assembly (34) is rotatably connected to the first half-crank (4) through the high-pressure bearing (35); and, the total weight of the low-pressure piston connecting rod assembly (32), low-pressure bearing (33), high-pressure piston connecting rod assembly (34), high-pressure bearing (35), counterweight part (31), first half-crank (4) and second half-crank (5) is supported by the box body (3) through the large bearing (6).

In summary, one segment of the second half-crank (5) is detachably connected to the first half-crank (4); another segment of the second half-crank (5), i.e., the first segment (7), extends out of the box body (3), and is detachably connected to the inner shaft (2) simply through the connecting member (13).

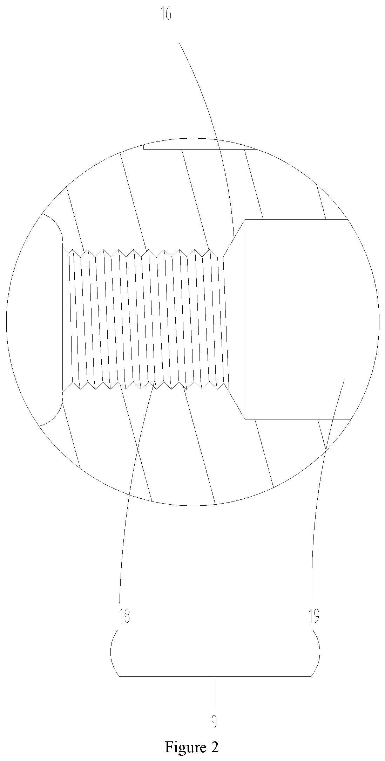

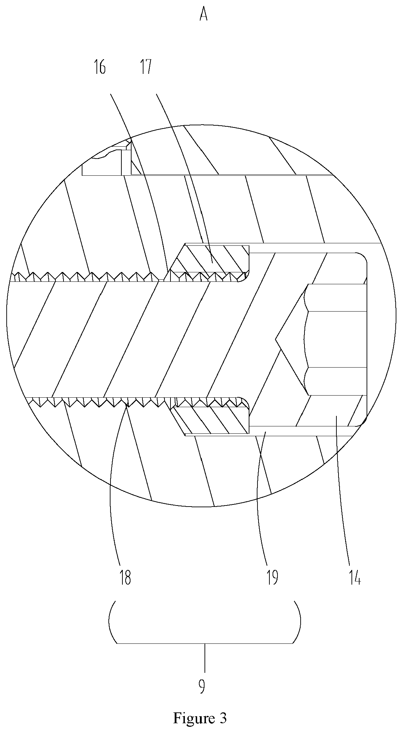

As shown in Figures 1 to 3, the structure of the detachable connection formed simply through the connecting member (13) between the first segment (7) and the inner shaft (2) is specifically: the inner shaft (2) is internally provided with a mating channel (8) and a connecting channel (9) that are mutually coaxial and interconnected with each other, the mating channel (8) forms a first opening (10) on one end face of the inner shaft (2), the first opening (10) faces the first half-crank (4), the connecting channel (9) forms a second opening (11) on the other end face of the inner shaft (2), the second opening (11) faces away from the first half-crank (4), the first segment (7) is internally provided along its axial direction with a threaded blind hole (12), the opening of the threaded blind hole (12) is located on the end face of the first segment (7) away from the first half-crank (4); the connecting member (13) has a head (14) and a shank (15), the outer surface of the shank (15) has threads, the maximum cross-sectional diameter of the shank (15) is smaller than the cross-sectional diameter of the head (14), and also smaller than the cross-sectional diameter of the mating channel (8) and the cross-sectional diameter of the connecting channel (9); when the first segment (7) and the inner shaft (2) are detachably connected through the connecting member (13), the first segment (7) is inserted from the first opening (10) into the mating channel (8), and the threaded blind hole (12), the mating channel (8), and the connecting channel (9) are coaxial; the connecting member (13) passes through the second opening (11), and, a part of the shank (15) of the connecting member (13) is threadedly connected with the threaded blind hole (12), the head (14) of the connecting member (13) is restricted within the connecting channel (9).

In this Example, through the mating channel (8) and connecting channel (9) provided inside the inner shaft (2), as well as the threaded blind hole (12) provided inside the first segment (7), during assembly, the threaded blind hole (12), the mating channel (8), and the connecting channel (9) are coaxial, the first segment (7) is inserted into the mating channel (8), the connecting member (13) only moves within the space defined and enclosed jointly by the hole wall of the threaded blind hole (12), a part of the channel inner wall of the mating channel (8), and the channel inner wall of the connecting channel (9), and detachably connects the first segment (7) and the inner shaft (2), that is, the first segment (7) and the inner shaft (2) are detachably connected through the connecting member (13), and the connecting member (13) only occupies the internal space of the first segment (7) and the inner shaft (2), thereby avoiding the connecting member (13) occupying the external space of the first segment (7) and the inner shaft (2).

The solution where the bearing assembly simultaneously includes the front bearing (27) and the rear bearing (23) is the first solution. In the first solution, the combination of 'inner shaft (2) and rotor (29)' is carried in a three-point manner respectively by the large bearing (6), the front bearing (27), and the rear bearing (23). The solution where the bearing assembly only comprises the rear bearing (23) is the second solution. The second solution is mainly applicable to models of air compressors with small displacement. For air compressors with small displacement, due to the short span of the rotor shaft, the front bearing (27) may be omitted, allowing the combination of the power component and the motor assembly to meet the usage requirements by supported in a two-point manner only through the large bearing (6) and the rear bearing (23).

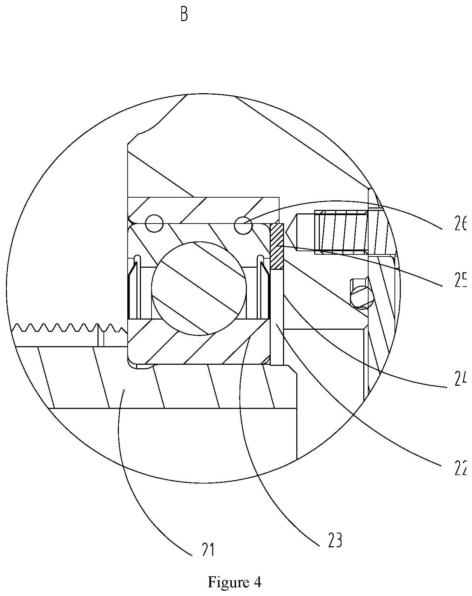

In both the first and second solutions, the bearing assembly comprises the rear bearing (23), and the bearing outer ring of the rear bearing (23) has a clearance fit with the motor housing (1); the specific structure of this clearance fit between the bearing outer ring of the rear bearing (23) and the motor housing (1) in these two solutions is as follows:
As shown in Figures 1 and 4, specifically, the motor housing (1) is provided at its end away from the first half-crank (4) with a rear shaft hole (22); the rear segment (21) of the inner shaft (2) passes through the rear shaft hole (22) along the axial direction of the rear shaft hole (22), and is connected to the rear shaft hole (22) through the rear bearing (23), wherein the rear segment (21) of the inner shaft (2) is connected with the bearing inner ring of the rear bearing (23) by an interference fit; the hole wall of the rear shaft hole (22) is provided with a first step surface (24), the first step surface (24) extends along the radial direction of the rear shaft hole (22), and the bearing outer ring of the rear bearing (23) and the first step surface (24) have a clearance fit along the axial direction of the rear bearing (23). And, the circumferential outer surface of the bearing outer ring of the rear bearing (23) and the circumferential inner wall of the rear shaft hole (22) have a clearance fit along the radial direction of the rear bearing (23).

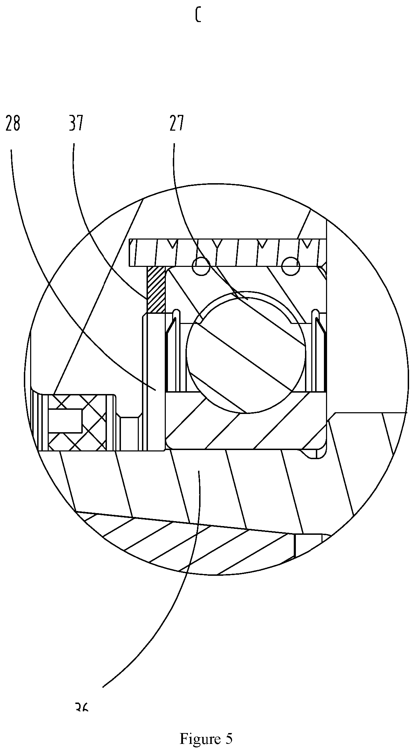

As mentioned above, in the first solution, the bearing outer ring of the front bearing (27) has a clearance fit with the motor housing (1); specifically:
As shown in Figures 1 and 5, preferably, the bearing assembly further comprises a front bearing (27), and a segment of the inner shaft (2) towards the first half-crank (4) along the axial direction of the inner shaft (2) is a front segment (36); the motor housing (1) is provided at its end towards the first half-crank (4) with a front shaft hole (28), and the front segment (36) of the inner shaft (2) passes through the front shaft hole (28) along the axial direction of the front shaft hole (28), and is connected to the front shaft hole (28) through the front bearing (27).

As shown in Figures 1 and 5, wherein, the front segment (36) of the inner shaft (2) is connected with the bearing inner ring of the front bearing (27) by an interference fit, the hole wall of the front shaft hole (28) is provided with a second step surface (37), the second step surface (37) extends along the radial direction of the front shaft hole (28), the bearing outer ring of the front bearing (27) and the second step surface (37) have a clearance fit. And, the circumferential outer surface of the bearing outer ring of the front bearing (27) and the circumferential inner wall of the front shaft hole (28) have a clearance fit.

The front bearing (27) is set up in a manner similar to the setup of 'the bearing outer ring of the rear bearing (23) having a clearance fit with the motor housing (1)', and the structures of the front bearing (27) and the rear bearing (23) are arranged in mirror symmetry.

From the background technology, it is known that the technical problem existing in the prior art is how to connect the crank shaft with the inner shaft by removing the elastic coupling.

In this Example, the first segment (7) and the inner shaft (2) may be detachably connected simply through the connecting member (13), the first segment (7) is a part of the second half-crank (5), and the second half-crank (5) is a part of the crank shaft; that is, in this Example, the crank shaft and the inner shaft (2) may be detachably connected simply through the connecting member (13); therefore, this Example achieves the removal of the coupling, enabling the crank shaft and the inner shaft (2) to be directly connected only through the connecting member (13); in summary, this Example solves the technical problem of how to connect the crank shaft with the inner shaft by removing the elastic coupling.

Furthermore, the connecting member (13) is a bolt or a screw, made of metal; its processing or procurement cost is far lower than that of a coupling; compared with the prior art, this Example also achieves the purpose of cost saving.

In the prior art, the motor and the crankcase are independent components, the inner shaft of the motor and the crank shaft of the crankcase are connected through an elastic coupling; since there is a gap between the driving end and the driven end of the elastic coupling, the load of the 'inner shaft and rotor' in the prior art cannot be supported by the double-row angular contact ball bearing in the prior art. Generally, the motor housing interior is provided with two bearings, here defined as a first bearing and a second bearing, wherein when the motor is connected to the crankcase, the first bearing is located between the double-row angular contact ball bearing inside the crankcase and the second bearing inside the motor housing; the bearing inner rings of the first bearing and the second bearing are respectively interference fitted with the inner shaft, and the bearing outer rings of the first bearing and the second bearing are respectively interference fitted with the motor housing, so that the inner shaft cannot produce displacement relative to the motor housing along the axial direction, and the motor housing supports the inner shaft and rotor through the first and second bearings; during motor operation, the load borne by the first bearing is greater than that borne by the second bearing, causing the first bearing to wear out before the second bearing, and the wear of the first bearing reduces the motor lifespan.

In this Example, the inner shaft (2) of the motor and the crank shaft of the crankcase are directly connected through the connecting member (13), allowing the inner shaft (2) of the motor and the crank shaft of the crankcase to be considered as an integrated structure, or in other words, the crank shaft of the crankcase may be regarded as an extension of the inner shaft (2) of the motor; thus, the large bearing (6) in this Example may, through 'the direct connection of the motor's inner shaft (2) and the crankcase's crank shaft via the connecting member (13)', bear the load from the motor's ' inner shaft (2) and rotor (29)';

In this Example, the inner shaft (2) corresponds to the inner shaft of the motor in the prior art; the position of the large bearing (6) corresponds to the position of the double-row angular contact ball bearing in the prior art, the position of the front bearing (27) corresponds to the position of the first bearing in the prior art, and the position of the rear bearing (23) corresponds to the position of the second bearing in the prior art; wherein, the size and support strength of the large bearing (6) are far higher than those of the front bearing (27) and rear bearing (23), and far higher than those of the first and second bearings in the prior art.

In the first solution, the bearing inner rings of the front bearing (27) and rear bearing (23) inside the motor are respectively interference fitted with the inner shaft (2), while the bearing outer rings of the front bearing (27) and rear bearing (23) inside the motor respectively have a clearance fit with the housing, allowing the inner shaft (2) to produce displacement relative to the housing during operation, and the large bearing (6), front bearing (27), and rear bearing (23) in this Example jointly bear the load from the motor's ' inner shaft (2) and rotor (29)'; under this setting, the load borne by the front bearing (27) from the motor's ' inner shaft (2) and rotor (29)' is less than the load borne by the first bearing in the prior art from its motor's 'motor shaft and rotor (29)'; under the conditions that the operating time of the motor is the same as that of the motor in prior art, and the operating speed of the motor in this Example is the same as that of the motor in prior art, the wear degree of the front bearing (27) in the first solution is lower than that of the first bearing in the prior art, making the lifespan of the front bearing (27) higher than that of the first bearing in the prior art, and consequently the lifespan of the motor in this Example higher than that of the motor in the prior art.

In the second solution, the bearing inner ring of the rear bearing (23) of the motor is interference fitted with the inner shaft (2), while the bearing outer ring of the rear bearing (23) inside the motor has a clearance fit with the motor housing (1), allowing the inner shaft (2) to produce displacement relative to the motor housing (1) along the axial direction during operation; due to the omission of the front bearing (27), the large bearing (6) and rear bearing (23) jointly bear the load from the motor's 'inner shaft (2) and rotor (29)'; on this basis, since the size and support strength of the large bearing (6) are greater than those of the omitted front bearing (27), such that under the conditions that the operating time of the motor is the same as that of the motor in 'first solution', and the operating speed of the motor is the same as that of the 'first solution', the wear degree of the large bearing (6) in the second solution is lower than that of the front bearing (27) in the aforementioned 'first solution', making the lifespan of the large bearing (6) higher than that of the front bearing (27) in the first solution; since the lifespan of the front bearing (27) in the aforementioned 'first solution' is higher than that of the first bearing in the prior art, and the lifespan of the large bearing (6) is higher than that of the front bearing (27) in the first solution, such that the lifespan of the large bearing (6) in the second solution is higher than that of the first bearing in the prior art, and consequently the lifespan of the motor in the second solution is higher than that of the motor in the prior art.

Furthermore, in this Example, in the first solution, the inner shaft (2) is rotatably connected to the motor housing (1) respectively through the front bearing (27) and the rear bearing (23); therefore, a small portion of the motor core load that the bearing assembly needs to bear is shared by the front bearing (27) and the rear bearing (23), thereby further reducing the loads borne respectively by the front bearing (27) and the rear bearing (23), which is more beneficial for improving the service life of the front bearing (27) and the rear bearing (23).

Furthermore, the prior art uses a structure that connects the inner shaft of the motor to the crankshaft through an elastic coupling, since the elastic body of the elastic coupling is generally a plastic product such as polyurethane, the lifespan is poor, and there is a risk of aging, wear, cracking and other failures during long-term use; in this Example, since the use of an elastic coupling is avoided, and a metal connecting member (13) is used to connect the motor's inner shaft and the crank shaft, the occurrence of the above problems may also be avoided.

Furthermore, when assembling the oil-free air compressor transmission structure, it is usually: the motor assembly and the bearing assembly are respectively assembled into the motor housing (1), the power component and the large bearing (6) are respectively assembled into the box body (3), and then the motor housing (1) and the box body (3) are joined and connected, so that the first segment (7) and the inner shaft (2) are coaxially connected. However, usually in actual assembly situations, after the motor housing (1) and the box body (3) are joined, often the assembly positions between the inner shaft (2) and the first segment (7) do not match along the axial direction of the inner shaft (2), resulting in a gap between the tapered outer surface of the first segment (7) and the tapered inner surface of the mating channel (8), that is, the tapered outer surface of the first segment (7) and the tapered inner surface of the mating channel (8) cannot be tightly fitted.

In this Example, the rear segment (21) of the inner shaft (2) is connected with the bearing inner ring of the rear bearing (23) by an interference fit, meaning the rear segment (21) of the inner shaft (2) and the bearing inner ring of the rear bearing (23) rotate synchronously; the bearing outer ring of the rear bearing (23) and the first step surface (24) have a clearance fit, meaning there is a gap between the bearing outer ring of the rear bearing (23) and the first step surface (24); such that, due to the clearance setting between the bearing outer ring of the rear bearing (23) and the first step surface (24), the position of the inner shaft (2) along its axial direction is adjustable. For example, as shown in Figure 4, when the inner shaft (2) needs to move to the right in Figure 4, the inner shaft (2) drives the bearing inner ring of the rear bearing (23) to move to the right, and the bearing inner ring of the rear bearing (23) is connected to the bearing outer ring of the rear bearing (23), which causes the bearing outer ring of the rear bearing (23) to also move to the right, thereby achieving the purpose of making the position of the inner shaft (2) adjustable in axial direction.

Furthermore, after the motor housing (1) and the box body (3) are joined, it often also occurs that, the inner shaft (2) and the first segment (7) are not coaxial along the radial direction of the inner shaft (2).

In this Example, the circumferential outer surface of the bearing outer ring of the rear bearing (23) and the circumferential inner wall of the rear shaft hole (22) have a clearance fit. This leads to, in the case where the inner shaft (2) and the first segment (7) are not coaxial, the inner shaft (2) may be adjusted by radial movement so that the axis of the inner shaft (2) and the axis of the first segment (7) are on the same straight line, and then the inner shaft (2) and the first segment (7) are assembled together. Therefore, in this Example, the purpose of making the position of the inner shaft (2) adjustable in radial direction is also achieved.

As mentioned above: the head (14) of the connecting member (13) is restricted within the connecting channel (9); specifically, in this Example, the connecting channel (9) is provided with a limiting step surface (16) inside, when the first segment (7) and the inner shaft (2) are detachably connected through the connecting member (13), the head (14) of the connecting member (13) is immovably restricted between the limiting step surface (16) and the second opening (11).

Usually, due to machining limitations, the limiting step surface (16) is difficult to be machined into a plane, while the side end face of the head (14) of the connecting member (13) facing the limiting step surface (16) is usually a plane, which easily leads to the contact between the head (14) of the connecting member (13) and the limiting step surface (16) usually being point-to-point contact, or line-to-line contact. This results in too small a contact area between the head (14) of the connecting member (13) and the limiting step surface (16), and too little friction between them. During motor startup and inner shaft (2) rotation, the head (14) and the limiting step surface (16) slip relative to each other, preventing the inner shaft (2) and the second half-crank (5) from rotating synchronously; therefore, how to increase the friction between the head (14) of the connecting member (13) and the limiting step surface (16) is a technical problem that needs to be solved. This technical problem is solved by the following technical solution.

As shown in Figures 1 to 3, the oil-free air compressor transmission structure of this Example further comprises an elastic washer (17). When the first segment (7) and the inner shaft (2) are detachably connected through the connecting member (13), the elastic washer (17) is located between the limiting step surface (16) and the head (14) of the connecting member (13) along the axial direction of the connecting channel (9); one side end face of the elastic washer (17) and the limiting step surface (16) form surface-to-surface contact, the other side and the end face of the head (14) of the connecting member (13) form surface-to-surface contact; the head (14) of the connecting member (13) abuts against the limiting step surface (16) through the elastic washer (17).

The elastic washer (17) has elasticity, and the material may be selected from the known materials in the prior art, such as rubber material, which are not limited here.

In this Example, the side end face of the elastic washer (17) facing the limiting step surface (16) is configured to have the same shape, for example, a curved surface as the limiting step surface (16), so that the side end face of the elastic washer (17) facing the limiting step surface (16) and the limiting step surface (16) form surface-to-surface contact; while the side end face of the elastic washer (17) facing the head (14) of the connecting member (13) is configured to be a plane consistent with the end face of the head (14), so that the side end face of the elastic washer (17) facing the head (14) of the connecting member (13) and the head (14) of the connecting member (13) form surface-to-surface contact.

In this Example, by providing the elastic washer (17) between the head (14) of the connecting member (13) and the limiting step surface (16), and the head (14) of the connecting member (13) and the limiting step surface (16) respectively forming surface-to-surface contact with the elastic washer (17), this leads to, during the rotation of the inner shaft (2), through the friction between the limiting step surface (16) and the elastic washer (17), the inner shaft (2) drives the elastic washer (17) to rotate synchronously, and then through the friction between the elastic washer (17) and the head (14) of the connecting member (13), drives the connecting member (13) to follow the inner shaft (2) to rotate synchronously, and then through the threaded connection relationship between the connecting member (13) and the threaded blind hole (12) in the first segment (7) of the second half-crank (5), drives the crank shaft to follow the inner shaft (2) to rotate synchronously.

In this Example, by providing the elastic washer (17) between the head (14) of the connecting member (13) and the limiting step surface (16), and the elastic washer (17) respectively forming surface-to-surface contact with the head (14) of the connecting member (13) and the limiting step surface (16), the friction between the head (14) of the connecting member (13) and the limiting step surface (16) is increased through the elastic washer (17); therefore, this Example solves the technical problem of how to increase the friction between the head (14) of the connecting member (13) and the limiting step surface (16).

As shown in Figure 1, furthermore, this Example also includes the following technical solution: in the oil-free air compressor transmission structure of this Example, the outer surface of the first segment (7) is configured as a tapered outer surface, and the tapered outer surface of the first segment (7) is convergent in the direction from the first half-crank (4) pointing to the inner shaft (2); the inner surface of the mating channel (8) is a tapered inner surface, and the tapered inner surface of the mating channel (8) is convergent in the direction from the first half-crank (4) pointing to the inner shaft (2); wherein, the taper angle of the tapered outer surface of the first segment (7) and the taper angle of the tapered inner surface of the mating channel (8) are consistent in size.

The purpose of such setting mainly has two aspects:
Firstly, in the connection process of the second half-crank (5) and the inner shaft (2), the first segment (7) needs to be gradually inserted into the mating channel (8). During the process of gradually inserting the first segment (7) into the mating channel (8), the first segment (7) moves along the direction from the first half-crank (4) pointing to the inner shaft (2), and the tapered outer surface of the first segment (7) and the tapered inner surface of the mating channel (8) are both convergent along the direction from the first half-crank (4) pointing to the inner shaft (2). This causes the tapered inner surface of the mating channel (8) to guide the tapered outer surface of the first segment (7), making it easier for the first segment (7) and the inner shaft (2) to be coaxially aligned during the blind insertion of the first segment (7).

Secondly, after the first segment (7) of the second half-crank (5) is inserted into the mating channel (8) of the inner shaft (2), through the threaded engagement relationship between the shank of the connecting member (13) and the threaded blind hole (12) inside the first segment (7), the tapered outer surface of the first segment (7) and the tapered inner surface of the mating channel (8) are tightly pressed against each other, thereby increasing the contact area between the first segment (7) and the mating channel (8), and increasing the friction between the first segment (7) and the mating channel (8).

Furthermore, as mentioned in the content of the first and second solutions above, the bearing outer ring of the rear bearing (23) and the first step surface (24) have a clearance fit along the axial direction of the rear bearing (23); and, the circumferential outer surface of the bearing outer ring of the rear bearing (23) and the circumferential inner wall of the rear shaft hole (22) have a clearance fit along the radial direction of the rear bearing (23); this leads to too little friction between the bearing outer ring of the rear bearing (23) and the hole wall of the rear shaft hole (22), making it extremely easy for the bearing outer ring of the rear bearing (23) to idle running. Once the bearing outer ring of the rear bearing (23) idle runs, the bearing outer ring of the rear bearing (23) will undergo sliding friction with the rear shaft hole (22), causing the surface of the bearing outer ring of the rear bearing (23) to wear; therefore, how to increase the friction between the bearing outer ring of the rear bearing (23) and the hole wall of the rear shaft hole (22) is a technical problem that needs to be solved. This technical problem is solved by the following technical solution.

A first elastic body (25) is filled within the clearance between the bearing outer ring of the rear bearing (23) and the first step surface (24) along the axial direction of the rear bearing (23); and/or, a second elastic body (26) is filled within the clearance between the circumferential outer surface of the bearing outer ring of the rear bearing (23) and the circumferential inner wall of the rear shaft hole (22) along the radial direction of the rear bearing (23).

The first elastic body (25) may be a structure such as a rubber washer or a metal corrugated washer, which may be compressed and deformed along the axial direction of the rear bearing (23); in this Example, the gap between the bearing outer ring of the rear bearing (23) and the first step surface (24) is filled by the first elastic body (25) along the axial direction of the rear bearing (23), thereby increasing the friction between the side face of the bearing outer ring of the rear bearing (23) and the first step surface (24) through the first elastic body (25).

The second elastic body (26) may be an O-ring structure, which may be compressed and deformed along the radial direction of the rear bearing (23). In this Example, the gap between the circumferential outer surface of the bearing outer ring of the rear bearing (23) and the circumferential inner wall of the rear shaft hole (22) is filled with the second elastic body (26), thereby increasing the friction between the circumferential outer surface of the bearing outer ring of the rear bearing (23) and the circumferential inner wall of the rear shaft hole (22) through the second elastic body (26).

In summary, this Example increases the friction between the side face of the bearing outer ring of the rear bearing (23) and the first step surface (24) by filling the gap between the bearing outer ring of the rear bearing (23) and the first step surface (24) with the first elastic body (25); and/or, increases the friction between the circumferential outer surface of the bearing outer ring of the rear bearing (23) and the circumferential inner wall of the rear shaft hole (22) by filling the gap between the circumferential outer surface of the bearing outer ring of the rear bearing (23) and the circumferential inner wall of the rear shaft hole (22) with the second elastic body (26); thereby avoiding the problem of the bearing outer ring of the rear bearing (23) rotating relative to the rear shaft hole (22).

In the first solution, correspondingly, a third elastic body is filled within the gap between the bearing outer ring of the front bearing (27) and the second step surface (37) along the axial direction of the front bearing (27); and/or, a fourth elastic body is filled within the gap between the circumferential outer surface of the bearing outer ring of the front bearing (27) and the circumferential inner wall of the front shaft hole (28) along the radial direction of the front bearing (27). Wherein, the third elastic body has the same structure as the first elastic body (25), and the fourth elastic body has the same structure as the second elastic body (26).

### Example 2

Most of the structure of the oil-free air compressor transmission structure in this Example is the same as that in Example 1. The content of this Example focuses on the parts different from the content in Example 1.

In Example 1, the first segment (7) and the inner shaft (2) are detachably connected through the connecting member (13), and the tapered outer surface of the first segment (7) and the tapered inner surface of the mating channel (8) of the inner shaft (2) are in tight contact.

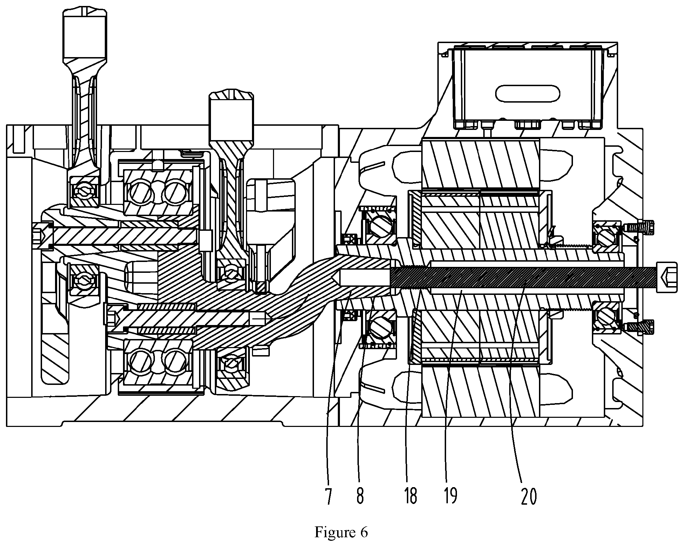

When the air compressor needs to be disassembled, the connecting member (13) should first be unscrewed and removed, and then the tapered outer surface of the first segment (7) and the tapered inner surface of the mating channel (8) should be separated from each other; to facilitate the separation of the tapered outer surface of the first segment (7) and the tapered inner surface of the mating channel (8), this Example further includes the following technical solution:
As shown in Figure 6, the connecting channel (9) comprises a threaded channel (18) and a smooth channel (19) arranged coaxially, wherein the threaded channel (18) is located between the mating channel (8) and the smooth channel (19), the channel inner wall of the threaded channel (18) has internal threads for cooperating with the external threads of a bolt member (20), the pitch diameter (the pitch diameter is the diameter of an imaginary cylinder where the widths of the grooves and ridges on the thread profile in the axial section are equal) of the cross-section of the threaded channel (18) is larger than the cross-section diameter of the threaded blind hole (12), and smaller than the cross-sectional diameter of the smooth channel (19).

The bolt member (20) has threads on its outer surface. In this Example, the bolt member (20) is a coarse-thread bolt, and its thread pitch diameter is larger than the thread pitch diameter of the shank (15) of the connecting member (13) in Example 1.

During disassembly, the connecting member (13) is unscrewed and removed. One end of the bolt member (20) passes through the threaded channel (18) and abuts against the end face of the first segment (7). A part of the outer surface of the bolt member (20) engages in threaded cooperation with the internal threads of the threaded channel (18), The bolt member (20) is screwed in along the direction from the smooth channel (19) pointing to the threaded channel (18), causing the bolt member (20) to push against one side end face of the first segment (7) located in the mating channel (8), thereby separating the tapered outer surface of the first segment (7) and the tapered inner surface of the mating channel (8) from each other.

### Example 3

This Example provides an oil-free air compressor, which comprises the oil-free air compressor transmission structure mentioned in Example 1.

### Example 4

This Example provides a vehicle, which comprises the oil-free air compressor mentioned in Example 3.

The above Examples only express several implementation modes of the present invention, and their description is relatively specific and detailed, but should not be construed as limiting the patent scope of the present invention. It should be pointed out that for those skilled in the art, several modifications and improvements may be made without departing from the concept of the present invention, and these all belong to the protection scope of the present invention. Therefore, the protection scope of the present invention should be based on the appended claims.

## Claims

1. An oil-free air compressor transmission structure, comprising a motor housing (1), a motor assembly, and a bearing assembly, the motor assembly is arranged inside the motor housing (1), the motor assembly comprises an inner shaft (2) and a rotor (29) fixedly sleeved on the outer surface of the inner shaft (2), the inner shaft (2) is rotatably connected to the motor housing (1) through the bearing assembly;
further comprising a box body (3), a power component, and a large bearing (6), the box body (3) is detachably connected to the motor housing (1), the power component comprises a first half-crank (4) and a second half-crank (5), the first half-crank (4) and the second half-crank (5) are mutually interlocked and connected to form a crank shaft, the crank shaft is rotatably connected to the box body (3) through the large bearing (6); wherein, the second half-crank (5) is located between the first half-crank (4) and the inner shaft (2) along the axial direction of the inner shaft (2);
**characterized in that**, the large bearing (6) is sleeved on the crank shaft, the large bearing (6) is used to bear a part of the load of the motor assembly, wherein the load of the motor assembly refers to the axial and radial forces of the inner shaft (2) and the rotor (29) of the motor assembly;
a segment of the second half-crank (5) away from the first half-crank (4) along the axial direction of the inner shaft (2) is a first segment (7), the first segment (7) and the inner shaft (2) are coaxially arranged; further comprising a connecting member (13), the first segment (7) and the inner shaft (2) can be separated from each other, or only detachably connected through the connecting member (13); wherein the connecting member (13) is a bolt or a screw;
the bearing assembly comprises a front bearing (27) and a rear bearing (23), wherein the inner shaft (2) is supported by the motor housing (1) through the front bearing (27) and the rear bearing (23), and the bearing outer rings of the front bearing (27) and the rear bearing (23) respectively have a clearance fit with the motor housing (1), the front bearing (27) is located between the large bearing (6) and the rear bearing (23) along the axial direction of the inner shaft (2); and, the size and support strength of the large bearing (6) are higher than the size and support strength of the front bearing (27) and the rear bearing (23);
or,
the bearing assembly only comprises a rear bearing (23), wherein a segment of the inner shaft (2) away from the first half-crank (4) is a rear segment (21), the rear segment (21) of the inner shaft (2) is supported by the motor housing (1) through the rear bearing (23), the bearing outer ring of the rear bearing (23) has a clearance fit with the motor housing (1); and, the size and support strength of the large bearing (6) are higher than the size and support strength of the rear bearing (23).

2. The oil-free air compressor transmission structure according to claim 1, **characterized in that**, the inner shaft (2) is internally provided with a mating channel (8) and a connecting channel (9) that are mutually coaxial and interconnected with each other, the mating channel (8) forms a first opening (10) on one end face of the inner shaft (2), the first opening (10) faces the first half-crank (4), the connecting channel (9) forms a second opening (11) on the other end face of the inner shaft (2), the second opening (11) faces away from the first half-crank (4), the first segment (7) is internally provided along its axial direction with a threaded blind hole (12), the opening of the threaded blind hole (12) is located on the end face of the first segment (7) away from the first half-crank (4);
the connecting member (13) has a head (14) and a shank (15), the outer surface of the shank (15) has threads, the maximum cross-sectional diameter of the shank (15) is smaller than the cross-sectional diameter of the head (14), and also smaller than the cross-sectional diameter of the mating channel (8) and the cross-sectional diameter of the connecting channel (9);
when the first segment (7) and the inner shaft (2) are detachably connected through the connecting member (13), the first segment (7) is inserted from the first opening (10) into the mating channel (8), the threaded blind hole (12), the mating channel (8), and the connecting channel (9) are coaxial; the connecting member (13) passes through the second opening (11), and, a part of the shank (15) of the connecting member (13) is threadedly connected with the threaded blind hole (12), the head (14) of the connecting member (13) is restricted within the connecting channel (9).

3. The oil-free air compressor transmission structure according to claim 2, **characterized in that**, the connecting channel (9) is internally provided with a limiting step surface (16), when the first segment (7) and the inner shaft (2) are detachably connected through the connecting member (13), the head (14) of the connecting member (13) is immovably restricted between the limiting step surface (16) and the second opening (11);
further comprising an elastic washer (17), when the first segment (7) and the inner shaft (2) are detachably connected through the connecting member (13), the elastic washer (17) is located between the limiting step surface (16) and the head (14) of the connecting member (13) along the axial direction of the connecting channel (9); one side end face of the elastic washer (17) and the limiting step surface (16) form surface-to-surface contact, the other side and the end face of the head (14) of the connecting member (13) form surface-to-surface contact; the head (14) of the connecting member (13) abuts against the limiting step surface (16) through the elastic washer (17).

4. The oil-free air compressor transmission structure according to claim 2, **characterized in that**, the outer surface of the first segment (7) is configured as a tapered outer surface, the tapered outer surface of the first segment (7) is convergent in the direction from the first half-crank (4) pointing to the inner shaft (2);
the inner surface of the mating channel (8) is a tapered inner surface; the tapered inner surface of the mating channel (8) is convergent in the direction from the first half-crank (4) pointing to the inner shaft (2);
wherein, the taper angle of the tapered outer surface of the first segment (7) and the taper angle of the tapered inner surface of the mating channel (8) are consistent in size.

5. The oil-free air compressor transmission structure according to claim 4, **characterized in that**, the connecting channel (9) comprises a threaded channel (18) and a smooth channel (19) arranged coaxially, wherein the threaded channel (18) is located between the mating channel (8) and the smooth channel (19), the channel inner wall of the threaded channel (18) has internal threads for cooperating with the external threads of a bolt member (20), the pitch diameter of the cross-section of the threaded channel (18) is larger than the cross-section diameter of the threaded blind hole (12), and smaller than the cross-sectional diameter of the smooth channel (19).

6. The oil-free air compressor transmission structure according to any one of claims 1-5, **characterized in that**, the motor housing (1) is provided at its end away from the first half-crank (4) with a rear shaft hole (22); the rear segment (21) of the inner shaft (2) passes through the rear shaft hole (22) along the axial direction of the rear shaft hole (22), and is connected to the rear shaft hole (22) through the rear bearing (23), wherein the rear segment (21) of the inner shaft (2) is connected with the bearing inner ring of the rear bearing (23) by an interference fit;
the hole wall of the rear shaft hole (22) is provided with a first step surface (24), the first step surface (24) extends along the radial direction of the rear shaft hole (22), the bearing outer ring of the rear bearing (23) and the first step surface (24) have a clearance fit along the axial direction of the rear bearing (23).

7. The oil-free air compressor transmission structure according to claim 6, **characterized in that**, the circumferential outer surface of the bearing outer ring of the rear bearing (23) and the circumferential inner wall of the rear shaft hole (22) have a clearance fit along the radial direction of the rear bearing (23).

8. The oil-free air compressor transmission structure according to claim 7, **characterized in that**, a first elastic body (25) is filled within the clearance between the bearing outer ring of the rear bearing (23) and the first step surface (24) along the axial direction of the rear bearing (23);
and/or,
a second elastic body (26) is filled within the clearance between the circumferential outer surface of the bearing outer ring of the rear bearing (23) and the circumferential inner wall of the rear shaft hole (22) along the radial direction of the rear bearing (23).

9. An oil-free air compressor, **characterized by** comprising the oil-free air compressor transmission structure according to any one of claims 1-8.

10. A vehicle, **characterized by** comprising the oil-free air compressor according to claim 9.
